# EUROPEAN PATENT APPLICATION

(11) **EP 2 017 472 A2**
(43) Date of publication of application: **21.01.2009**
(21) Application number: 08005219.4
(22) Date of filing: 19.03.2008
(51) Int. Cl.: F03D 9/00, H02J 3/38

(54) **A system for guaranteeing continuity of operation in wind turbine generators during voltage dips not exceeding a predetermined level**

(30) Priority: 18.07.2007 ES 200702004
(71) Applicant: Corporación Zigor, S.A., 01015 Vitoria Alava (ES)
(72) Inventor: Iribarren Asenjo, Jose Luis, 01013 Vitoria (Alava) (ES)
(74) Representative: Becker Kurig Straus

(57) **Abstract**

This invention relates to a system designed to adapt wind turbine generators, in order to guarantee their continuity of operation during "voltage dips" of predetermined duration and level.

The glossary of terms in the field of power transmission defines a "voltage dip" as a sharp drop in voltage in one or several phases and the subsequent recovery of the same in a matter of milliseconds.

## Description

### FIELD OF THE INVENTION

This invention relates to a system designed to adapt wind turbine generators, in order to guarantee their continuity of operation during "voltage dips" of predetermined duration and level.

The glossary of terms in the field of power transmission defines a "voltage dip" as a sharp drop in voltage in one or several phases and the subsequent recovery of the same in a matter of milliseconds.

### PRIOR ART

An electricity grid has a plurality of suppliers generating electricity using different technologies (thermal power stations, electrical power stations, hydraulic power stations..). At the same time, there is a plurality of consumers who connect and disconnect from the grid, depending on their needs, which is translated, for example, into the starting and stopping of large motors, the connection and disconnection of transformers, etc.; there can also be lightning strikes or short-circuits between phases on the lines or between any phase on the lines and earth, as well as other phenomena. In each case, the result is momentary dips in voltage in the electricity transfer grid system, which affects the electronics of household PC's and computers controlling and regulating production and productive process machinery, causing interruptions in their operation.

This field has recently been invaded by wind turbine generators which, on account of their cost and delicate design, enjoy rigorous self-protection which, in the event of a voltage dip, triggers a process that finishes with the wind turbine generator stopping. When there is a lack of voltage in the supply grid to which the wind turbine generator is connected, this process involves the wind turbine generator's rotational velocity being increased, because the mechanical energy that it receives from the wind through its blades cannot be removed to a grid that is not under tension and, since this increase in velocity can be dangerous for the wind turbine generator, the latter is disconnected from the electricity grid. Even if some of the aforementioned mechanical energy could be removed to the grid under such conditions, this would cause the generator to become out of step, resulting in over-currents and torque changes, another reason for the wind turbine generator to be disconnected. To sum up, wind turbine generators for generating electricity that are connected to electricity grids are therefore able to respond to a voltage dip on the grid or an interruption, which normally involves them automatically disconnecting during a brief voltage drop.

In the past, this situation had no major repercussions on the functioning of the grid, as few wind turbine generators were connected to it. Now that a significant amount of wind power is connected to the grid, the deficit in wind power generation that can be disconnected when there is a voltage dip can jeopardise the stability of the supply system, as has already happened on a number of occasions. Apart from the intrinsic problem of wind turbine generators themselves, with the starting and stopping, the disconnection of a significant amount of wind power means that the remaining suppliers connected to this grid have to rebalance the system by increasing their contribution, sometimes even beyond their capabilities.

Since the trend is towards this type of power generation becoming increasingly important and indispensable, operators of European grids have established a number of minimum voltage dip conditions that must be satisfied by wind farms and wind turbine generators without disconnection, before they can become part of a supply grid without representing a risk to its operational stability. Finally, when the growth in wind power generation installed in an area exceeds a given value relative to the power produced by other types of generation, there is a need for the wind turbine generators to continue generating during voltage dips, following a chart of time/depth (of voltage dip) coordinates for the values established by the new regulations already in force.

### EXPLANATION OF THE INVENTION AND ITS ADVANTAGES

In view of this state of affairs, this invention proposes a system for use in electricity distribution grids that is designed to guarantee continuity of operation in wind turbine generators during voltage dips not exceeding a predetermined level.

To this end, the system according to the invention is interconnected between the wind turbine generator and the grid and has a switch -I-, an inverter for the wind turbine generator -I/G-, an inverter for the grid -I/R-, a power dissipater -D- and a detection and command control -C-; the detection and command control -C- controls the aforementioned switch -I-, the inverter for the wind turbine generator -I/G-, the inverter for the grid -I/R-and the power dissipater -D-. The switch -I- is connected in series between the wind power generator and the grid; the inverter for the wind power generator -I/G- is electrically connected to the generator engine, the inverter for the grid -I/R- is electrically connected to the grid.

The inverter for the wind turbine generator -I/G-, the power dissipater -D- and the inverter for the grid -I/R-are interconnected for power purposes.

When the grid is operating normally, the system behaves in the manner of a closed switch. On the other hand, when a voltage dip occurs, the system performs by means of three types of actions:
- in relation to the wind turbine generator, a voltage is supplied as if it were the grid, keeping the wind turbine generator operating normally; this is handled by the inverter for the wind turbine generator -I/G-;
- in relation to the grid, an active and reactive pattern is generated in line with the grid's requirements; this is handled by the inverter for the grid -I/R-;
- during the voltage dip, the excess power is dissipated; this is handled by the power dissipater - D-.

In order to perform these actions, the system's detection and command control -C- permanently monitors the state of the grid, keeping the switch -I- closed when there are no voltage dips. When a voltage dip (voltage drop) of a defined depth occurs, the detection and command control -C-acts on the system elements in accordance with the following actions, although not necessarily in the sequence outlined below:
- it instructs the switch -I- to open;
- it starts the inverter for the wind turbine generator -I/G- and the inverter for the grid -I/R-;
- it distributes power during the voltage dip, so that the flows of dissipated energy and energy generated adhere to the specified levels.

Among the advantages offered by this system, the following should be highlighted:
- The wind turbine generator is not disconnected from the grid unnecessarily and the grid is supplied with what it needs during voltage dips.
- Voltage dips do not produce electrical and mechanical transients, which reduces the premature ageing of the wind turbine generator.
- The proposed system can be applied to any type of wind turbine generator, irrespective of its design technology.

### DRAWINGS AND REFERENCES

In order to better understand the invention, the attached drawings represent an industrial embodiment by way of example, intended purely as an illustration and without being limiting.
Figure 1 shows a coordination chart depicting a voltage dip.
Figure 2 shows a block diagram illustrating the configuration of the system in the invention.

The following references are indicated in these figures:
1. Switch -I-
2. Inverter for wind turbine generator -I/G-
3. Inverter for grid -I/R-
4. Power dissipater -D-
5. Detection and command control -C-
6. Wind turbine generator
7. Electricity grid
8. Power flow under normal conditions (without voltage dip)
9. Power flow generated by the guarantee system
10. Dissipated power flow

### DESCRIPTION OF A PREFERRED EMBODIMENT

In relation to the drawings and references listed above, the attached diagrams illustrate a preferred embodiment of the object of the invention, which relates to a system applied to electricity supply grids, in order to guarantee continuity of operation in wind turbine generators during voltage dips not exceeding a predetermined level.

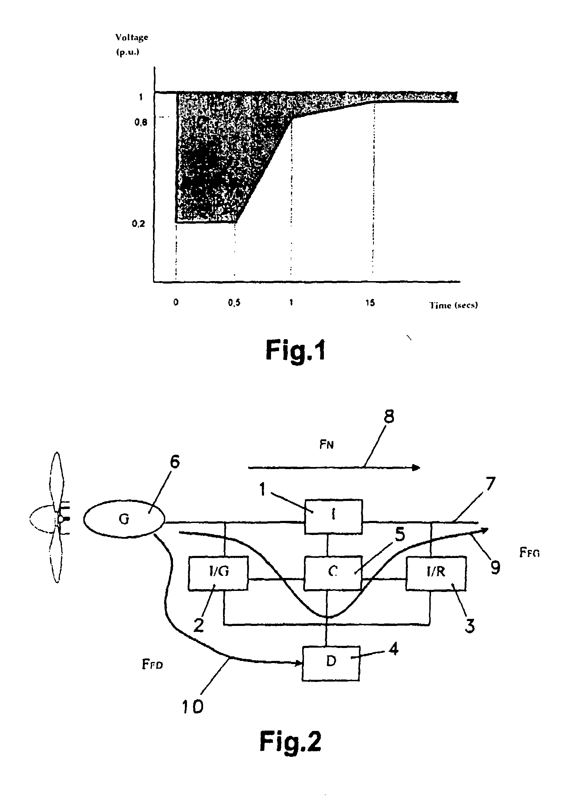

Figure 1 illustrates a voltage dip by means of a coordination chart or a graph of time/depth of voltage dips, which measures the duration of the voltage dip along the x-axis and the depth of the dip on the y-axis.

As illustrated by the block diagram shown in Figure 2, this system is interconnected between the wind turbine generator (6) and the electricity grid (7) and has a switch -I- (1), an inverter for the wind turbine generator -I/G- (2), an inverter for the grid -I/R- (3), a power dissipater -D- (4) and a detection and command control -C- (5); the detection and command control -C- (5) is connected to the aforementioned switch -I- (1), the inverter for the wind turbine generator -I/G- (2), the inverter for the grid -I/R- (3) and the power dissipater -D- (4); the switch -I-(1) is connected in series between the wind turbine generator (6) and the electricity grid (7); the inverter for the wind turbine generator -I/G- (2) is connected between the switch input -I- (1) and the power dissipater -D- (4); and the inverter for the grid -I/R- (3) is connected between the output of the switch -I- (1) and the power dissipater -D- (4). In this diagram, when the grid operates under normal conditions in the absence of any voltage dips, the switch -I- (1) remains closed; on the other hand, if the permanent monitoring performed by the detection and command control -C- (5) detects a given voltage dip, it proceeds to open the switch -I- (1) and start the inverter for the wind turbine generator -I/G- (2) and the inverter for the grid -I/R- (3), so that the same voltage is supplied through the former, as would have been the case under normal grid operating conditions, and the wind turbine generator maintains its normal operating system, without stopping or being disconnected from the grid and, an active and reactive pattern is generated by the latter, in line with the grid's needs, all of which takes place while the surplus power produced by the wind turbine generator during the voltage dip and not supplied to the grid is dissipated by the power dissipater -D- (4). This diagram in Figure 2 represents the energy flow under normal conditions (without a voltage dip) (8), the power flow generated by the proposed guarantee system (9) and the dissipated power flow.

As has been said, this system prevents unnecessary stoppages in wind turbine generators, increasing their service lives, reducing breakdowns and saving on maintenance requirements, in addition to which, it has the special feature of being able to be implemented in wind turbine generators with any sort of design technology.

## Claims

1. A system for guaranteeing continuity of operation in wind turbine generators during voltage dips not exceeding a predetermined level, **characterised in that** it is inter-connected in series between the wind turbine generator (6) and the electricity grid (7) and has a switch -I- (1), an inverter for the wind turbine generator -I/G- (2), an inverter for the grid -I/R-(3), a power dissipater -D- (4) and a detection and command control -C- (5); the detection and command control -C- (5) is connected to the aforementioned switch -I- (1) , the inverter for the wind turbine generator -I/G- (2), the inverter for the grid -I/R-(3) and the power dissipater -D- (4); the switch -I-(1) is connected in series between the wind turbine generator (6) and the electricity grid (7); the inverter for the wind turbine generator -I/G- (2) is connected between the input of the switch -I- (1) and the power dissipater -D- (4) and the switch for the grid -I/R- (3) is connected between the output of the switch -I- (1) and the power dissipater -D- (4).
